# EUROPEAN PATENT SPECIFICATION

(11) **EP 4 202 301 B1**
(45) Date of publication and mention of the grant of the patent: **11.03.2026**
(21) Application number: 22166138.2
(22) Date of filing: 31.03.2022
(51) Int. Cl.: F23R 3/06, F23R 3/04

(54) **COMBUSTOR WITH DILUTION OPENINGS**
BRENNKAMMER MIT VERDÜNNUNGSÖFFNUNGEN
CHAMBRE DE COMBUSTION COMPORTANT DES OUVERTURES DE DILUTION

(30) Priority: 21.12.2021 IN 202111059704; 04.03.2022 US 202217686800
(43) Date of publication of application: 28.06.2023
(73) Proprietor: General Electric Company, Evendale, OH 45215 (US)
(72) Inventor: GIRIDHARAN, Manampathy, Schenectady, 12345 (US); COOPER, Clayton, Schenectady, 12345 (US); BENJAMIN, Michael, Schenectady, 12345 (US); VISE, Steven, Schenectady, 12345 (US); BUCARO, Michael, Schenectady, 12345 (US); PATRA, Ajoy, Schenectady, 12345 (US); NAIK, Pradeep, Schenectady, 12345 (US); VUKANTI, Perumallu, Schenectady, 12345 (US); CHIRANTHAN, R. Narasimha, Schenectady, 12345 (US)
(74) Representative: Openshaw & Co.

(56) References cited:
- FR-A1- 3 098 569
- JP-A- S5 913 829
- US-A- 2 974 485
- US-A- 3 593 518
- US-A- 5 289 686
- US-A1- 2007 227 149
- US-A1- 2016 223 200
- US-A1- 2016 298 843
- US-B1- 6 192 689

## Description

### CROSS-REFERENCE TO RELATED APPLICATIONS

This application claims priority to IN Provisional Application Serial No. 202111059704, filed December 21, 2021.

### TECHNICAL FIELD

The present subject matter relates generally to a combustor with dilution holes, more specifically to a combustor having a set of dilution holes that form dilution openings in the combustor.

### BACKGROUND

Turbine engines are driven by a flow of combustion gases passing through the engine to rotate a multitude of turbine blades. A combustor can be provided within the turbine engine and is fluidly coupled with a turbine into which the combusted gases flow.

The use of hydrocarbon fuels in the combustor of a turbine engine is known. Generally, air and fuel are fed to a combustion chamber, the air and fuel are mixed, and then the fuel is burned in the presence of the air to produce hot gas. The hot gas is then fed to a turbine where it cools and expands to produce power. By-products of the fuel combustion typically include environmentally harmful toxins, such as nitrogen oxide and nitrogen dioxide (collectively called NOₓ), carbon monoxide (CO), unburned hydrocarbons (UHC) (e.g., methane and volatile organic compounds that contribute to the formation of atmospheric ozone), and other oxides, including oxides of sulfur (e.g., SO₂ and SO₃).

Varieties of fuel for use in combustion turbine engines are being explored. Hydrogen or hydrogen mixed with another element or compound can be used for combustion, however hydrogen or a hydrogen mixed fuel can result in a higher flame temperature than traditional fuels. That is, hydrogen or a hydrogen mixed fuel typically has a wider flammable range and a faster burning velocity than traditional fuels such petroleum-based fuels, or petroleum and synthetic fuel blends.

Standards stemming from air pollution concerns worldwide regulate the emission of oxides of nitrogen (NOₓ), unburned hydrocarbons (UHC), and carbon monoxide (CO) generated as a result of the turbine engine operation. In particular, nitrogen oxide (NOₓ) is formed within the combustor as a result of high combustor flame temperatures during operation. It is desirable to decrease NOₓ emissions while still maintaining desirable efficiencies by regulating the profile and or pattern within the combustor.

JP-S5913829-A discloses a gas turbine combustor configured to reduce NOx and CO. The combustor has a first scoop hole having an inner diameter (d2) and a length (l2) fixed to a combustion chamber and a second scoop hole having an inner diameter (d1) is fitted into the first scoop hole through a support member leaving a gap (t2) from the latter hole with the hole projecting from the top end of the first scoop hole by a length (11). Likewise, a third scoop hole having an inner diameter (d0) is fitted into the second scoop hole leaving a gap (t1) from the latter hole with the hole projecting from the hole by a length (10), to thereby form the air scoop hole having a predetermined length of projection L. With the above structure, a part of air flowing through the scoop hole is injected from the gaps (t1) and (t2) so that the projections and are cooled. Therefore, it is possible to enlarge the length of the air scoop hole and to reduce the generation of NOx CO, HC and the like.

US 6 192 689 B1 relates to a reduced emissions gas turbine combustor. An optimized combustor cooperating with a compressor in driving a gas turbine comprises a cylindrical outer combustor wall having an upstream fuel entry region and a downstream turbine entry region. An array of mixing holes are disposed about the periphery of the outer combustor wall adjacent to the fuel entry region so as to lower NOx production therein. An array of dilution holes are medially disposed within the outer combustor wall to provide an entry for dilution air to the combustor.

### BRIEF DESCRIPTION OF THE DRAWINGS

In the drawings:
FIG. 1 is a schematic of a turbine engine.
FIG. 2 is a cross-sectional view of the combustion section of FIG. 1 having a combustor liner with multiple sets of dilution holes according to an aspect of the disclosure herein.
FIG. 3 is a schematic of a combustor with multiple sets of dilution holes according to an aspect of the disclosure herein.
FIG. 4 is a schematic of a combustor with a first set of dilution holes and a second set of dilution holes according to an aspect of the disclosure herein.
FIG. 5 is a schematic of a combustor with a first set of dilution holes and a second set of dilution holes according to another aspect of the disclosure herein.
FIG. 6 is a schematic of a combustor with a first set of dilution holes and a second set of dilution holes according to yet another aspect of the disclosure herein.
FIG. 7 is a schematic of a combustor liner with a first row of dilution openings having a first set of dilution inlet shapes and a second row of dilution openings having a second set of dilution inlet shapes according to an aspect of the disclosure herein.
FIG. 8 is a schematic of a combustor liner with the first row of dilution openings having the first set of dilution inlet shapes and the second row of dilution openings having a third set of dilution inlet shapes according to an aspect of the disclosure herein.
FIG. 9 is a schematic of a combustor liner with the first row of dilution openings having the first set of dilution inlet shapes and the second row of dilution openings having a fourth set of dilution inlet shapes according to an aspect of the disclosure herein.
FIG. 10 is a schematic of a combustor liner with the first row of dilution openings staggered with respect to the second row of dilution openings according to an aspect of the disclosure herein.
FIG. 11 is a schematic of a combustor liner with the first row of dilution openings defining a larger flow area than the second row of dilution openings according to an aspect of the disclosure herein.
FIG. 12 is a flow chart of a method for controlling NOₓ in a combustion chamber.

### DETAILED DESCRIPTION

Aspects of the disclosure described herein are directed to a combustor, and in particular a combustor liner having dilution holes. For purposes of illustration, the present disclosure will be described with respect to a turbine engine. Many of the combustors designed for traditional fuels would not be suitable for a hydrogen or a hydrogen mixed fuels, therefore the combustor as described herein designed with the combustion of hydrogen and hydrogen mixed fuels taken into consideration. It will be understood, however, that aspects of the disclosure described herein are not so limited and that a combustor as described herein can be implemented in engines, including but not limited to turbojet, turboprop, turboshaft, and turbofan engines. Aspects of the disclosure discussed herein may have general applicability within non-aircraft engines having a combustor, such as other mobile applications and non-mobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid. The term "fluid communication" means that a fluid is capable of making the connection between the areas specified.

Additionally, as used herein, the terms "radial" or "radially" refer to a direction away from a common center. For example, in the overall context of a turbine engine, radial refers to a direction along a ray extending between a center dome centerline of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

Approximating language, as used herein throughout the specification and claims, is applied to modify any quantitative representation that could permissibly vary without resulting in a change in the basic function to which it is related. Accordingly, a value modified by a term or terms, such as "about", "approximately", "generally", and "substantially", are not to be limited to the precise value specified. In at least some instances, the approximating language may correspond to the precision of an instrument for measuring the value, or the precision of the methods or machines for constructing or manufacturing the components and/or systems. In at least some instances, the approximating language may correspond to the precision of an instrument for measuring the value, or the precision of the methods or machines for constructing or manufacturing the components and/or systems. For example, the approximating language may refer to being within a 1, 2, 4, 5, 10, 15, or 20 percent margin in either individual values, range(s) of values and/or endpoints defining range(s) of values. Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

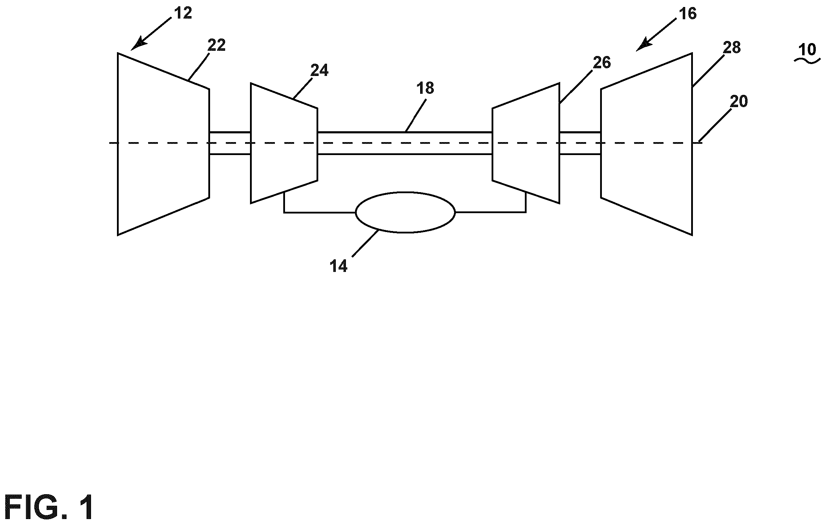

FIG. 1 is a schematic view of a turbine engine 10. As a non-limiting example, the turbine engine 10 can be used within an aircraft. The turbine engine 10 can include, at least, a compressor section 12, a combustion section 14, and a turbine section 16. A drive shaft 18 rotationally couples the compressor and turbine sections 12, 16, such that rotation of one affects the rotation of the other, and defines a rotational axis 20 for the turbine engine 10.

The compressor section 12 can include a low-pressure (LP) compressor 22, and a high-pressure (HP) compressor 24 serially fluidly coupled to one another. The turbine section 16 can include an LP turbine 26, and an HP turbine 28 serially fluidly coupled to one another. The drive shaft 18 can operatively couple the LP compressor 22, the HP compressor 24, the LP turbine 26 and the HP turbine 28 together. Alternatively, the drive shaft 18 can include an LP drive shaft (not illustrated) and an HP drive shaft (not illustrated). The LP drive shaft can couple the LP compressor 22 to the LP turbine 26, and the HP drive shaft can couple the HP compressor 24 to the HP turbine 28. An LP spool can be defined as the combination of the LP compressor 22, the LP turbine 26, and the LP drive shaft such that the rotation of the LP turbine 26 can apply a driving force to the LP drive shaft, which in turn can rotate the LP compressor 22. An HP spool can be defined as the combination of the HP compressor 24, the HP turbine 28, and the HP drive shaft such that the rotation of the HP turbine 28 can apply a driving force to the HP drive shaft which in turn can rotate the HP compressor 24.

The compressor section 12 can include a plurality of axially spaced stages. Each stage includes a set of circumferentially-spaced rotating blades and a set of circumferentially-spaced stationary vanes. The compressor blades for a stage of the compressor section 12 can be mounted to a disk, which is mounted to the drive shaft 18. Each set of blades for a given stage can have its own disk. The vanes of the compressor section 12 can be mounted to a casing which can extend circumferentially about the turbine engine 10. It will be appreciated that the representation of the compressor section 12 is merely schematic and that there can be any number of stages. Further, it is contemplated, that there can be any other number of components within the compressor section 12.

Similar to the compressor section 12, the turbine section 16 can include a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section can be mounted to the casing in a circumferential manner. It is noted that there can be any number of blades, vanes and turbine stages as the illustrated turbine section is merely a schematic representation. Further, it is contemplated, that there can be any other number of components within the turbine section 16.

The combustion section 14 can be provided serially between the compressor section 12 and the turbine section 16. The combustion section 14 can be fluidly coupled to at least a portion of the compressor section 12 and the turbine section 16 such that the combustion section 14 at least partially fluidly couples the compressor section 12 to the turbine section 16. As a non-limiting example, the combustion section 14 can be fluidly coupled to the HP compressor 24 at an upstream end of the combustion section 14 and to the HP turbine 28 at a downstream end of the combustion section 14.

During operation of the turbine engine 10, ambient or atmospheric air is drawn into the compressor section 12 via a fan (not illustrated) upstream of the compressor section 12, where the air is compressed defining a pressurized air. The pressurized air can then flow into the combustion section 14 where the pressurized air is mixed with fuel to define a fuel/air mixture and ignited, thereby generating combustion gases. Some work is extracted from these combustion gases by the HP turbine 28, which drives the HP compressor 24. The combustion gases are discharged into the LP turbine 26, which extracts additional work to drive the LP compressor 22, and the exhaust gas is ultimately discharged from the turbine engine 10 via an exhaust section (not illustrated) downstream of the turbine section 16. The driving of the LP turbine 26 drives the LP spool to rotate the fan (not illustrated) and the LP compressor 22. The pressurized airflow and the combustion gases can together define a working airflow that flows through the fan, compressor section 12, combustion section 14, and turbine section 16 of the turbine engine 10.

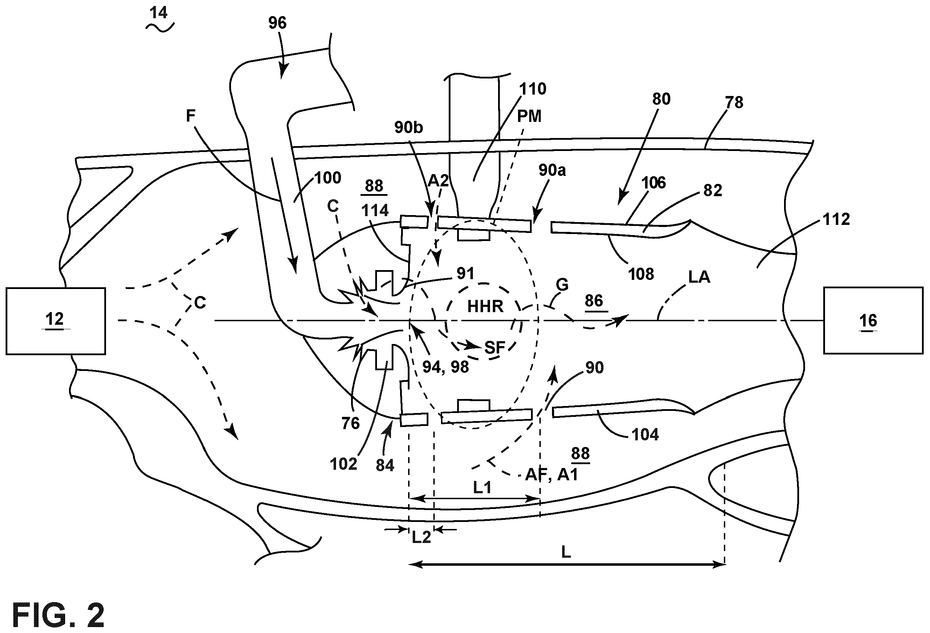

FIG. 2 depicts a cross-section view of the combustion section 14 located between the compressor section 12 and the turbine section 16 of the turbine engine 10. The combustion section 14 can include an annular arrangement of fuel injectors 76 each connected to a combustor 80. It should be appreciated that the annular arrangement of fuel injectors can be one or multiple fuel injectors and one or more of the fuel injectors 76 can have different characteristics and that the one fuel injector 76 shown is for illustrative purposes only and is not intended to be limiting. The combustor 80 can have a can, can-annular, or annular arrangement depending on the type of engine in which the combustor 80 is located. In a non-limiting example, an annular arrangement is illustrated and disposed within a casing 78. The combustor 80 can include an annular combustor liner 82, a dome assembly 84 including a dome wall 114 which together define a combustion chamber 86 about a dome centerline (DC). A compressed air passageway 88 can be defined at least in part by both combustor liner 82 and the casing 78. At least one fuel injector 76 is fluidly coupled to the combustion chamber 86. A passage 90 can fluidly connect the compressed air passageway 88 and the combustor 80. The passage 90 can be defined by multiple sets of dilution holes located in the combustor liner 82, by way of non-limiting example a first set of dilution holes 90a and a second set of dilution holes 90b are illustrated.

The fuel injector 76 can be coupled to and disposed within the dome assembly 84 upstream of a flare cone 91 to define a fuel outlet 94. The fuel injector 76 can include a fuel inlet 96 that can be adapted to receive a flow of fuel (F) and a linear fuel passageway 100 extending between the fuel inlet 96 and the fuel outlet 94. A swirler 102 can be provided at the dome inlet 98 to swirl incoming air in proximity to fuel (F) exiting the fuel injector 76 and provide a homogeneous mixture of air and fuel entering the combustor 80.

The combustor liner 82 can be defined by a wall 104 having an outer surface 106 and an inner surface 108 at least partially defining the combustion chamber 86. The wall 104 can be made of one continuous monolithic portion or be multiple monolithic portions assembled together to define the combustor liner 82. By way of non-limiting example, the outer surface 106 can define a first piece of the wall 104 while the inner surface 108 can define a second piece of the wall 104 that when assembled together form the combustor liner 82. As described herein, the wall 104 includes the first and second sets of dilution holes 90a, 90b. It is further contemplated that the combustor liner 82 can be any type of combustor liner 82, including but not limited to a double walled liner or a tile liner. An igniter 110 can be provided at the wall 104 and fluidly coupled to the combustion chamber 86, at any location, by way of non-limiting example between the first and second sets of dilution holes 90a, 90b.

The first set of dilution holes 90a can be downstream from the second set of dilution holes 90b. The second set of dilution holes 90b can be located closer to the dome wall 114. The second set of dilution holes 90b are located in the wall 104 such that a measured length (L2) between a center of the second set of dilution holes 90b and a hot side of the dome wall 114 is equal to or between 0 to 0.2 times a combustor length (L). A measured length (L1) between the first set of dilution holes 90a and the hot side of the dome wall 114 is equal to or between 0.2 to 0.7 times the combustor length (L). A primary mixing zone (PM) is located immediately downstream from the dome inlet 98. A region of high heat release (HHR) is defined within the primary mixing zone (PM) between the first and second sets of dilution holes 90a, 90b.

During operation, compressed air (C) can flow from the compressor section 12 to the combustor 80 through the compressed air passageway 88. The first and second sets of dilution holes 90a, 90b in the combustor liner 82 allow passage of at least a portion of the compressed air (C) to define a dilution airflow (AF), from the compressed air passageway 88 to the combustion chamber 86.

Some compressed air (C) can be mixed with the fuel (F) and upon entering the combustor 80 are ignited within the combustion chamber 86 by one or more igniters 110 to define a flame for generating combustion gas (G). The combustion gas (G) is mixed using the dilution airflow (AF) supplied through the first and second sets of dilution holes 90a, 90b, and mixes within the combustion chamber 86, after which the combustion gas (G) flows through a combustor outlet 112 and exits into the turbine section 16.

The extent to which the dilution airflow (AF) penetrates into the combustion chamber 86 is higher from the first set of dilution holes 90a than from the second set of dilution holes 90b. The first set of holes 90a define a first dilution airflow (A1) and the second set of holes 90b define a second dilution airflow (A2). The first set of dilution holes 90a are formed to have higher penetration for achieving lower temperature towards the center of the combustor chamber 86. The higher penetration also contributes to lower NOₓ emission, a better combustor exit temperature profile, and a pattern factor.

The second set of dilution holes 90b are for controlling a shape of the flame proximate the dome inlet 98 by pushing a swirler flow (SF) inward. The second set of dilution holes 90b are also for controlling radial spread of the swirler flow (SF) for flame stability purpose. This controls the shape and size of the flame in the primary mixing zone (PM) which in turn controls a region of high heat release (HHR). The region of high heat release (HHR) is formed between the first and second sets of dilution holes 90a, 90b. The region of high heat release (HHR) dictates NOₓ emission. The shape and size of the region of high heat release (HHR) is controlled by the distance between the first and second sets of dilution holes 90a, 90b and the strength of the dilution airflow (AF) exhausting from the first and second set of dilution holes 90a, 90b.

Further, the second set of dilution holes 90b enhances mixing in the primary mixing zone (PM) due to a high shear created by the interaction of the dilution airflow (AF) with the swirler flow (SF). This enables a more uniform temperature in the primary mixing zone (PM) which in turn reduces NOₓ emission. Dilution airflow (AF) from the second set of dilution holes 90b impinges on the swirler flow (SF) to create a flow structure that for cooling the combustion liner 82.

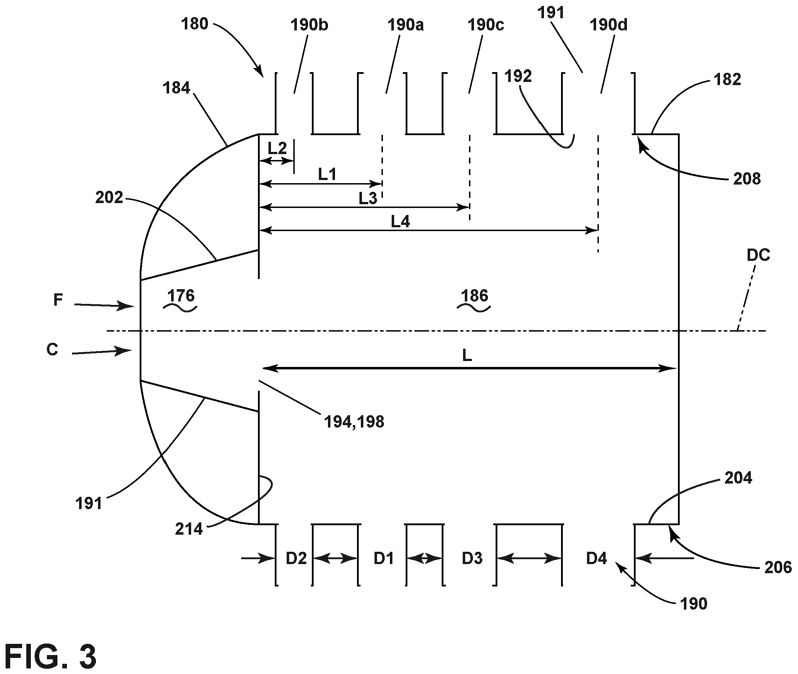

FIG. 3 is a schematic of a combustor 180, a variation of the combustor 80 of FIG. 2, according to another aspect of the disclosure herein. The combustor is substantially similar to the combustor 80, therefore, like parts will be identified with like numerals increased by 100. It should be understood that the description of the like parts of the combustor 80 applies to the combustor 180 unless otherwise noted.

The combustor 180 has a combustion chamber 186 that is defined by a combustor liner 182 and a dome assembly 184 including a dome wall 214. The combustor 180 includes multiple sets of dilution holes illustrated as four sets of dilution holes, including a first set 190a, a second set 190b, a third set 190c, and a fourth set 190d. Each of the sets of dilution holes 190a, 190b, 190c, 190d can include a passage 190 extending between an inlet 191 and an outlet opening 192 defining openings into the combustion chamber 186. The outlet opening 192 can define a corresponding first, second, third, and fourth diameter (D1), (D2), (D3), (D4). In one aspect of the disclosure the passage 190 can also define the corresponding diameters, in other words the passage 190 can have a constant diameter between the inlet 191 and the outlet opening 192. A geometric center of each of the sets of dilution holes 190a, 190b, 190c, 190d is located at a measured length (L1), (L2), (L3), (L4), respectively, wherein the measured lengths (L1), (L2), (L3), (L4) extend parallel to the dome centerline (DC) from the dome wall 114. In the exemplary combustor liner 182 illustrated, as the value of the measured length (L1), (L2), (L3), (L4) increases so does the value of the diameter (D1), (D2), (D3), (D4). In another example, as the value of the measured length increases the value of the diameter can decrease. Any combination of diameter size and length value is further contemplated. There can be N-number of sets of dilution holes in the combustor liner 182 spaced axially from each other with gradually increasing or decreasing diameter as the measured length increases to create a gradual increase or decrease or combination in jet penetration in order to achieve lower gas temperature and lower NOₓ. The way in which the dilution airflow (AF) splits between different sets of dilution holes can provide variation for the best performance in an engine.

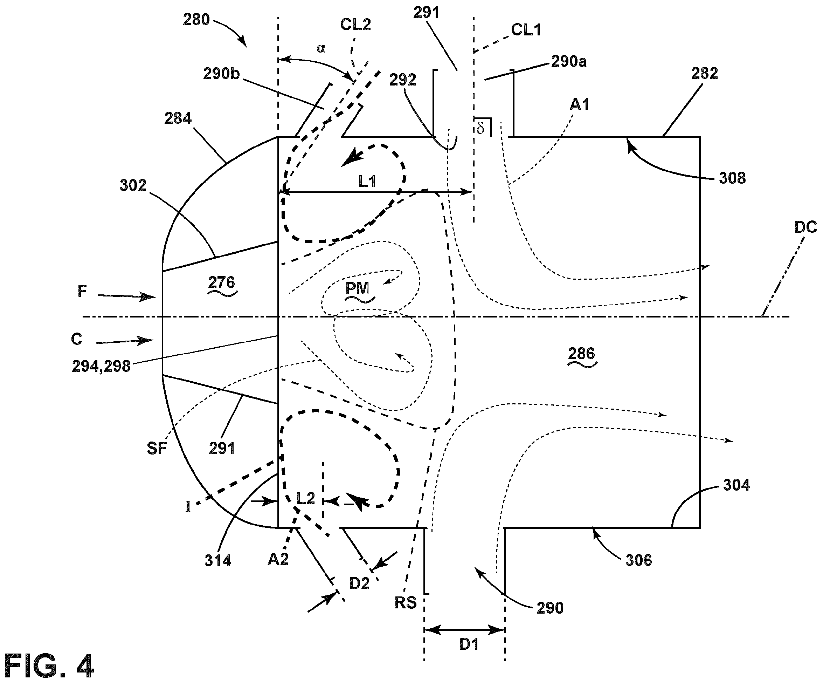

FIG. 4 is a schematic of a combustor 280, a variation of the combustor 80 of FIG. 2, according to another aspect of the disclosure herein. The combustor is substantially similar to the combustor 80, therefore, like parts will be identified with like numerals increased by 200. It should be understood that the description of the like parts of the combustor 80 applies to the combustor 280 unless otherwise noted.

The combustor 280 has a combustion chamber 286 that is defined by a combustor liner 282 and a dome assembly 284 including a dome wall 314. The combustor includes a first set of dilution holes 290a and a second set of dilution holes 290b. The first set of dilution holes 290a is spaced a first measured length (L1) parallel to a dome centerline (DC) of the combustor 280 from the dome wall 214. Each passage 290 in the first set of dilution holes 290a can define a first centerline (CL1) oriented approximately (within 5% of) perpendicular to the combustor liner 282 to define a first dilution angle (δ) of about (within 5% of) 90°. The second set of dilution holes 290b is spaced a second measured length (L2) from the dome wall 214. The second measured length (L2) is less than the first measured length (L1). Each passage 290 in the second set of dilution holes 290b can define a second centerline (CL2) that intersects the dome wall 314 to define a second dilution angle (α) equal to or less than 90°. In some implementations the dilution angle (α) is less than 45°. The second dilution angle (α) can be an acute angle with respect to the dome wall 314.

It can more clearly be seen that the first dilution airflow (A1) penetrates into the combustion chamber 86 a higher amount, by way of non-limiting example all the way to or nearly to the dome centerline (DC) than the second dilution airflow (A2).

In operation, a swirler 302 mixes incoming compressed air (C) in proximity to fuel (F) exiting a fuel injector 276 and provides a homogeneous mixture of air and fuel to define a swirler flow (SF) entering the combustor 280. The second set of dilution holes 290b is located proximate a fuel outlet 294/dome inlet 298 such that the second dilution airflow (A2) is introduced to the combustion chamber 286 in a manner in which the second dilution airflow (A2) impinges on the dome wall 214 to define an impinging dilution airflow (I). The second set of dilution holes 290b are inclined toward the dome wall 214 to cool the dome wall 214 and to slide the impinging dilution airflow (I) along the dome wall 214 to control radial spread (RS), illustrated in dashed line, of the swirler flow (SF). In some implementations the angle of orientation with regards to an outer surface 306 of the combustion liner 282 can be different than the angle of orientation with regards to an inner surface 308 of the combustion liner 282. Changing the angle of inclination of the dilution passage along with a size of the dilution outlet opening between the inner and outer surfaces of the liner helps to achieve different shape and size of the high heat release zone (HHR) described herein. This helps to control scrubbing of the swirler flow on the liner wall thereby avoiding higher liner temperatures. Also, the different angles and diameters of the first and second sets of dilution holes 290a, 290b can achieve different levels of mixing in the primary mixing zone (PM) of the combustor 280 as a dilution airflow (D) from the second set of dilution holes 290b impinges on the swirler flow (SF) which helps to control NOₓ. Furthermore, the second set of dilution holes 290b can control flame shape which in turn helps in controlling temperature within the primary mixing zone (PM) and hence NOₓ emission.

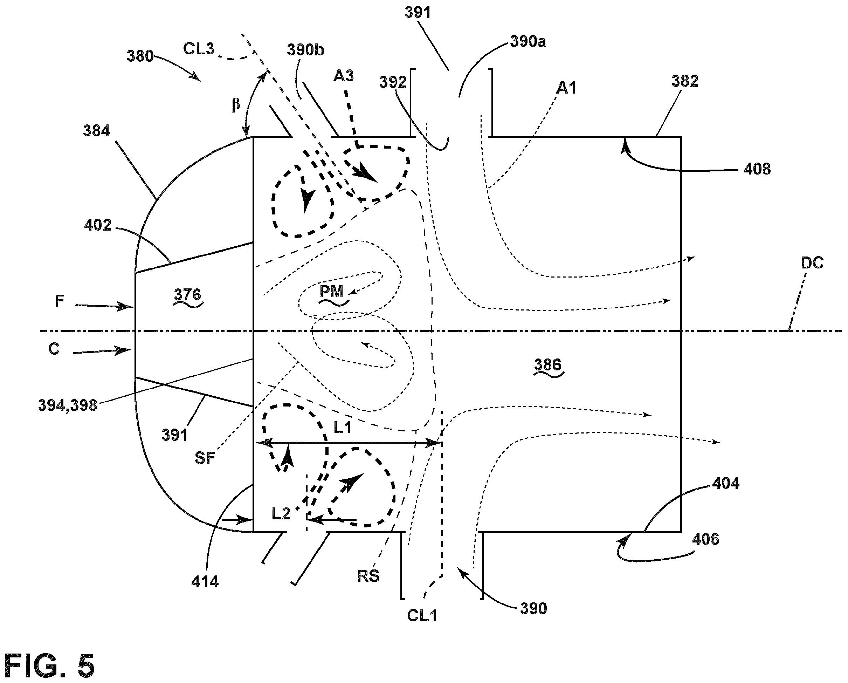

FIG. 5 is a schematic of a combustor 380, a variation of the combustor 80 of FIG. 2, according to another aspect of the disclosure herein. The combustor is substantially similar to the combustor 80, therefore, like parts will be identified with like numerals increased by 300. It should be understood that the description of the like parts of the combustor 80 applies to the combustor 380 unless otherwise noted.

The combustor includes the first set of dilution holes 390a and a second set of dilution holes 390b. The second set of dilution holes 390b is spaced a second measured length (L2) from a dome wall 414. The measured length (L2) is less than a first measured length (L1). A passage 390 of the second set of dilution holes 390b can define a third centerline (CL3) that intersects the combustor liner 382 to define a third dilution angle (β) equal to or less than 90°. In some implementations the dilution angle (β) is less than 45°. Unlike the second set of dilution holes 290b of FIG. 4, the second set of dilution holes 390b are oriented to point away from the dome wall 414. The third dilution angle (β) is defined as an acute angle between the combustor liner 382 and the third centerline (CL3). A third dilution airflow (A3) can be exhausted through an outlet opening 392 of the second set of dilution holes 390b to directly impinge a swirler flow (SF). By directing the second set of dilution holes 390b towards the swirler flow an additional control of the spread of the swirler flow (SF) as well controlling of the region where high heat release (HHR) is provided. Direct impingement of the third dilution airflow (A3) on the swirler flow (SF) helps to increase turbulence levels in the primary mixing zone (PM) which further helps improve mixing in the primary mixing zone (PM) leading to uniform temperature distribution in the primary mixing zone (PM) which in turn results in lower NOₓ emission.

In operation, a swirler 402 mixes incoming compressed air (C) in proximity to fuel (F) exiting a fuel injector 376 and provides a homogeneous mixture of air and fuel to define a swirler flow (SF) entering the combustor 380. The second set of dilution holes 390b is located proximate the fuel outlet 394/dome inlet 398 such that the third dilution airflow (A3) is introduced to the combustion chamber 386 in a manner in which the third dilution airflow (A3) pushes the swirler flow (SF) toward the dome centerline (DC). The second set of dilution holes 390b are inclined away from a dome wall 314 in order to directly impinge the third dilution airflow (A3) onto the swirler flow (SF) and to collapse the swirler flow (SF) towards the dome centerline (DC) to control a radial spread (RS) of the swirler flow (SF). This push controls the location of the swirler flow (SF) leading to less scrubbing of the flame on an inner surface 408 of the combustor liner 382.

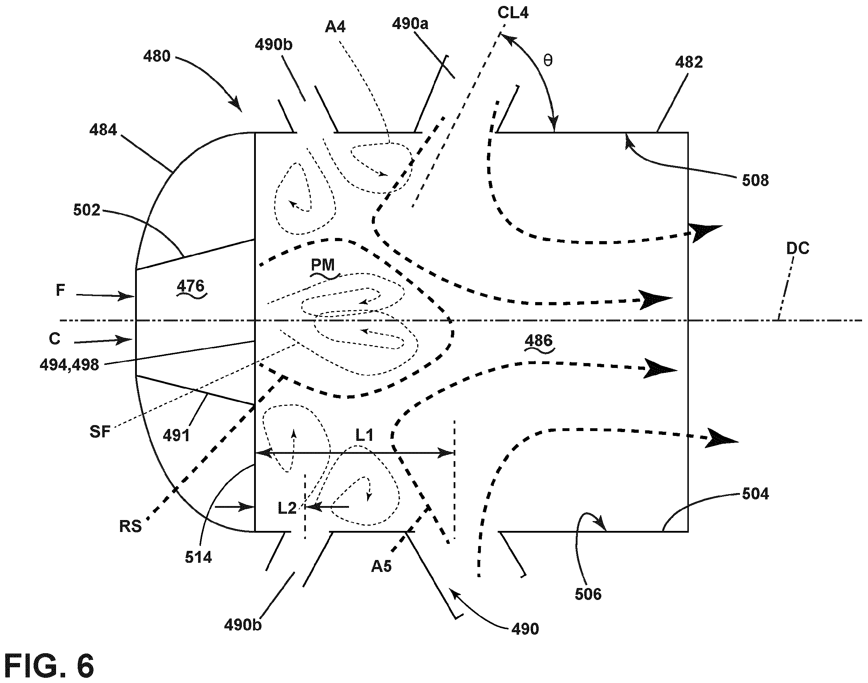

FIG. 6 is a schematic of a combustor 480, a variation of the combustor 80 of FIG. 2, according to another aspect of the disclosure herein. The combustor is substantially similar to the combustor 80, therefore, like parts will be identified with like numerals increased by 400. It should be understood that the description of the like parts of the combustor 80 applies to the combustor 480 unless otherwise noted.

The combustor 480 includes a first set of dilution holes 490a and a second set of dilution holes 490b. The first set of dilution holes 490a is angled toward a fuel outlet 494/dome inlet 498. The first set of dilution holes 490a is spaced a first measured length (L1) from a dome wall 514. The first measured length (L1) is greater than a second measured length (L2) of the second set of dilution holes 490b. A passage 490 of the first set of dilution openings 490a can define a fourth centerline (CL4) that intersects the combustor liner 482 to define a fourth dilution angle (θ) equal to or less than 90°. In some implementations the fourth dilution angle (θ) is less than 45°. By way of non-limiting example the third dilution angle (θ) can be an acute angle between the combustor liner 482 and the fourth centerline (CL4).

In operation the first set of dilution holes 490a can be inclined towards the dome inlet 498 and the second set of dilution holes 490b can be inclined away from the dome inlet 498 such that a fourth dilution airflow (A4) and a fifth dilution airflow (A5) from both the first and second sets of dilution holes 490a, 490b impinge on a swirler flow (SF) to further reduce a central re-circulation zone, or radial spread (RS) to keep flame in a central region of the combustor 480. Angling both the first and second sets of dilution holes 490a, 490b towards each other helps to further improve turbulence levels in the primary mixing zone (PM) due to interaction of the fourth and fifth dilution airflows (A4, A5). This along with both the fourth and fifth dilution airflows (A4, A5) interacting with the swirler flow (SF) further increases shear leading to improved mixing, uniform temperature distribution and lower NOₓ emission.

It should be understood that any combination of the first and second sets of dilution holes described herein is contemplated. Further the axial location of an outlet opening of each of the sets of dilution holes on the outer surface of the combustor liner as described herein can be different than the location of the same outlet opening on the inner surface of the combustor liner.

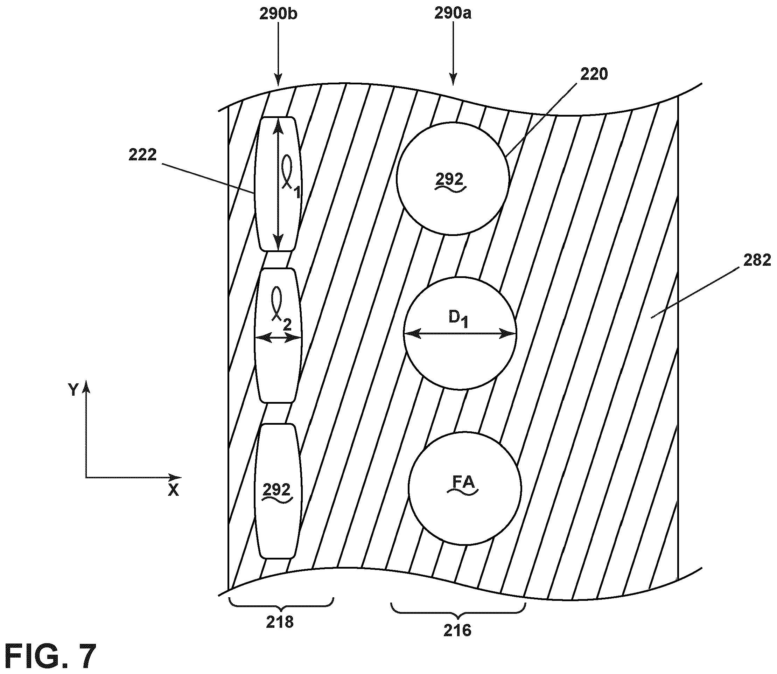

FIG. 7 is a schematic of a combustor liner, by way of non-limiting example, the combustor liner 282 of FIG. 4, including the first set of dilution holes 290a and the second set of dilution holes 290b. It can more clearly be seen that the first and second sets of dilution holes 290a, 290b include at least one outlet opening 292, illustrated as multiple outlet openings 292 located in the combustor liner 282. An axial direction is indicated by 'x' while a circumferential direction is indicated as 'y'.

The first set of dilution holes 290a can be part of or define a whole of a first row of dilution openings 216 extending at least partially circumferentially about the combustor liner 282. It is further contemplated that the first row of dilution openings 216 extends about an entirety of the combustor liner 282. The first row of dilution openings 216 can include outlet openings 292 with a first set of dilution inlet shapes 220. The first set of dilution inlet shapes 220 can be circular and define a first diameter (D1) as described herein.

Each outlet opening 292 described herein has a flow area (FA) defining the physical cross-sectional area of the outlet opening 292 for the dilution airflow (D). The flow area (FA) is defined by the axial and circumferential dimensions previously mentioned, i.e. the hydraulic diameter of the outlet opening 292. A total dilution flow area is the sum of the flow area (FA) through all sets of dilution holes. The total flow area for the second set of dilution holes 290b as described here can be from 1% to 80% of the total dilution flow with the remaining portion of the flow entering the combustion chamber through the remaining sets of dilution openings described herein. For example, the second set of dilution holes 290b can be sized to allow 50% of the total dilution flow through, while the first set of dilution holes 290a can be sized to also allow 50% of the total dilution flow through.

In another example, referring back to FIG. 3, the second set of dilution holes 190b can be sized to allow 50% of the total dilution flow through, while the first set of dilution holes 190a can be sized to allow 20% of the total dilution flow through, the third set of dilution holes 190c can be sized to allow 20% of the total dilution flow through, and the fourth set of dilution holes 190d can be sized to allow 10% of the total dilution flow through.

Referring again to FIG. 7, the second set of dilution holes 290b can be part of or define a whole of a second row of dilution openings 218 extending at least partially circumferentially about the combustor liner 282 or about an entirety of the combustor liner 282. The second row of dilution openings 218 can include outlet openings 292 with a second set of dilution inlet shapes 222. The second set of dilution inlet shapes 222 can be oblong and extend circumferentially 'y' a dimension (ℓ1) larger than a dimension (ℓ2) in which the shape 222 extends axially 'x'. The second set of dilution inlet shapes 222 can be any shape, including but not limited to like elliptical, racetrack, or tear drop to control penetration of a dilution jet defined by the dilution airflow (AF) described herein. Flow penetration of the second set of dilution openings 290b in turn will dictate the shape of the primary mixing zone (PM) and proximity of the high velocity swirler flow (SF) to the liner and flame shape. Elliptical or racetrack shape holes will achieve lower penetration compared to equivalent flow area circular holes. Also, having lateral elongated slots helps to control the primary mixing zone (PM) and flame shape in lateral direction as well.

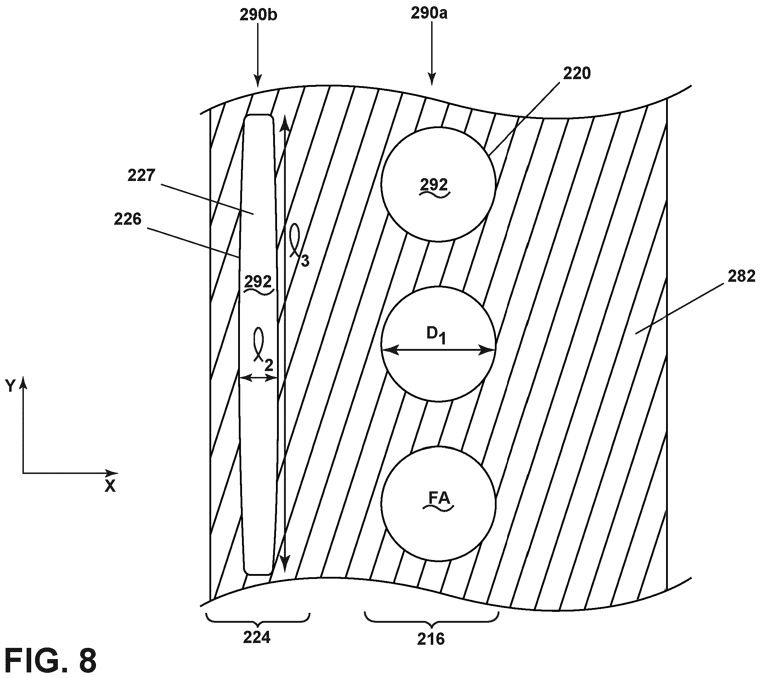

FIG. 8 is a schematic of a combustor liner, by way of non-limiting example the combustor liner 282 of FIG. 4, including the first set of dilution holes 290a and the second set of dilution holes 290b. The at least one outlet opening 292, illustrated as multiple outlet openings 292 is more clearly illustrated. An axial direction is indicated by 'x' while a circumferential direction is indicated as 'y'.

The second set of dilution holes 290b can be part of or define a whole of a third row of dilution openings 224 extending at least partially circumferentially about the combustor liner 282 or about an entirety of the combustor liner 282. The third row of dilution openings 224 can include outlet openings 292 with a third set of dilution inlet shapes 226. The third set of dilution inlet shapes 226 can define a slot 227 extending circumferentially 'y' a dimension (ℓ3) larger than the dimension (ℓ2) in which the shape 226 extends axially 'x'. Further the slot 227 can have a dimension (ℓ3) larger than multiple times the first diameter (D1) of the openings 292 in the first row of dilution openings 216. By way of non-limiting example the dimension (ℓ3) can be more than three times the first diameter (D1). Wider lateral coverage of slot helps to control the primary mixing zone (PM), flame shape in the lateral direction and to achieve uniform temperature in the lateral direction.

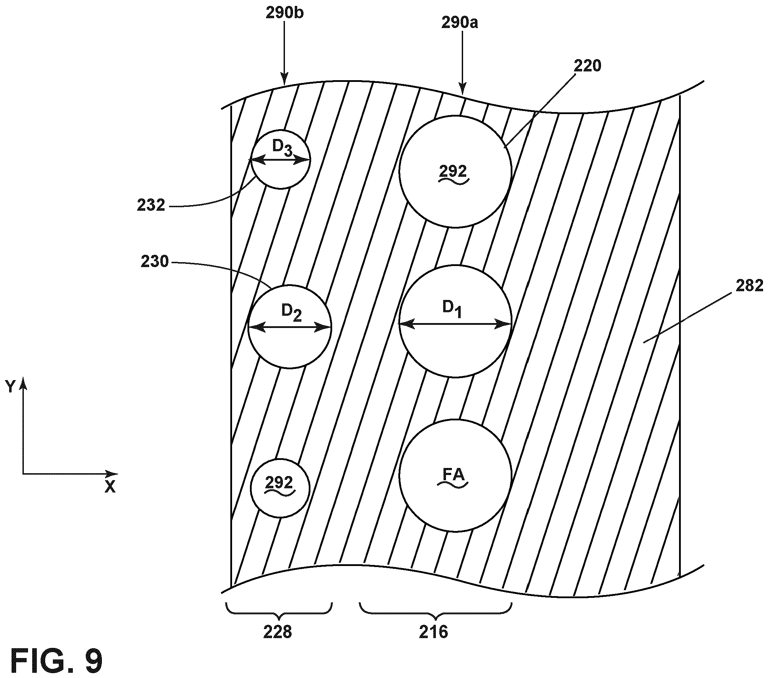

FIG. 9 is a schematic of a combustor liner, by way of non-limiting example the combustor liner 282 with the first set of dilution holes 290a and the second set of dilution holes 290b. It can more clearly be seen that the first and second sets of dilution holes 290a, 290b include at least one outlet opening 292, illustrated as multiple outlet openings 292 located in the combustor liner 282. An axial direction is indicated by 'x' while a circumferential direction is indicated as 'y'.

The first set of dilution holes 290a can be part of or define a whole of the first row of dilution openings 216. Each of the dilution outlet openings 292 of the first set of dilution openings 290a can have the shape of the first set of dilution inlet shapes 220 with an outlet opening 292 defining the first diameter (D1). The second set of dilution openings 290b can be part of or define a whole of a fourth row of dilution openings 228. The fourth row of dilution openings 228 can include outlet openings 292 with various inlet sizes, referred to in FIG. 9 as a second inlet size 230 and a third inlet size 232. The outlet opening 292 with the second inlet size 230 can have a second diameter (D2) and the opening with the third inlet size 232 can have a third diameter (D3). In one aspect of the disclosure herein the second and third inlet sizes 230, 232 alternate circumferentially about the combustor liner 282 in the fourth row of dilution openings 228. It is further contemplated that the first diameter is greater than the second diameter which is greater than the third diameter (D1 > D2 > D3). The opening 292 with the second inlet size 230 can be bigger relative to the opening 292 with the third inlet size 232 which can define an in-between cup dilution opening for use as an inline opening to push re-circulation inward, this can achieve further uniformity in temperature distribution. It should be understood that while the sizes can vary, the shape of the openings 292 can be the same, by way of non-limiting example circular as illustrated.

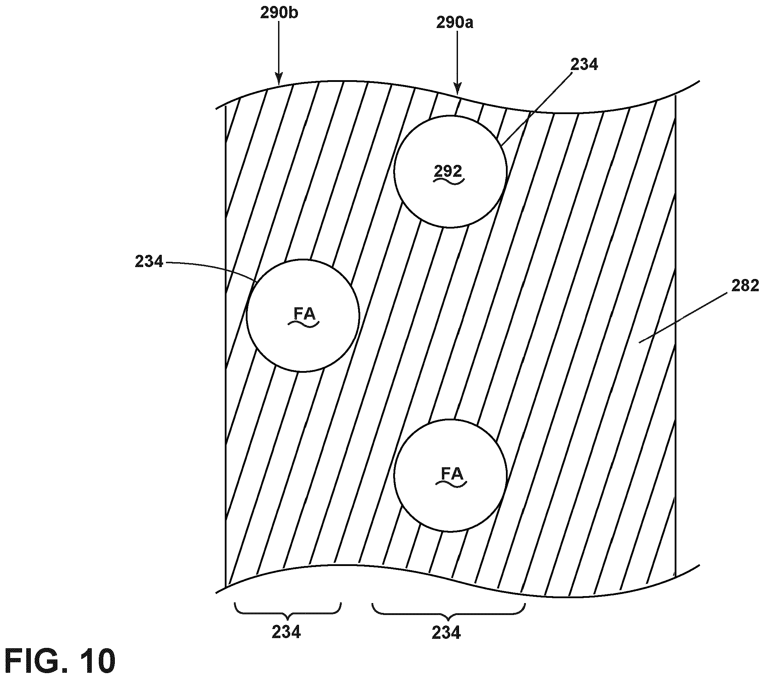

FIG. 10 is a schematic of a combustor liner, by way of non-limiting example the combustor liner 282 of FIG. 4, including the first set of dilution holes 290a and the second set of dilution holes 290b defining staggered rows 234. The staggered rows 234 can be any number of rows, including two rows as illustrated where outlet openings 292 are circumferentially staggered with respect to each other. While illustrated as having the same inlet size 234, it should be understood that the outlet openings 292 can define any size inlet.

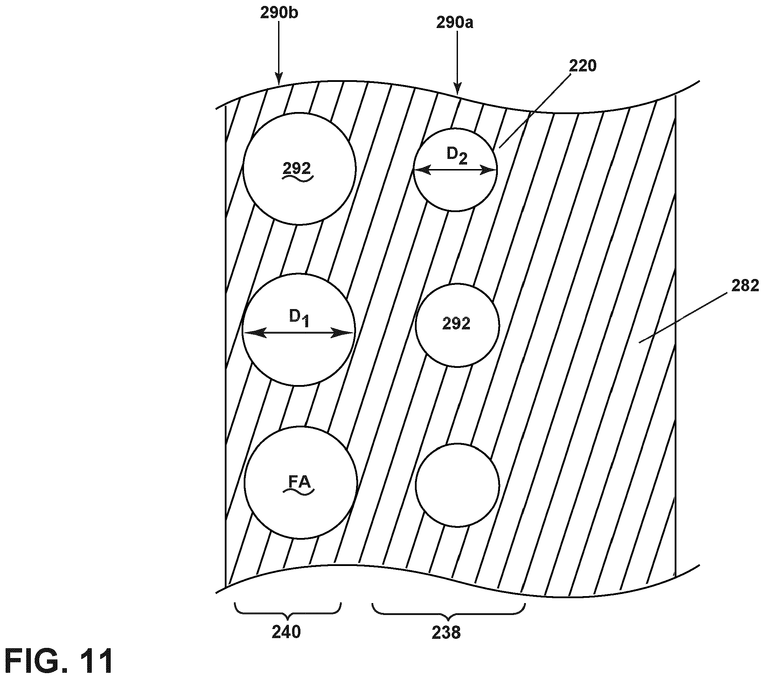

FIG. 11 is a schematic of a combustor liner, by way of non-limiting example the combustor liner 282 of FIG. 4, including the first set of dilution holes 290a defining a fifth row of dilution openings 238 and the second set of dilution holes 290b defining a sixth row of dilution openings 240. The second set of dilution holes 290b can have outlet openings 292 defining flow areas (FA) that are larger than those of the first set of dilution holes 290a. A larger flow area (FA) proximate the dome wall 114 (FIG. 2) can achieve further uniformity in temperature distribution within the combustion chamber 86 (FIG. 2).

It should be understood that the outlet openings 292 described herein provide an outlet for the passages described herein and simultaneously define an inlet into the combustion chamber. It should be understood that the number of outlet openings 292 can be different between different rows of outlet openings 292. Further it is possible to have circumferential variation of the diameters described herein. Also, there can be circumferential staggering between forward and aft dilution holes to control temperature distribution in the primary zone. Any combination of dilution outlet opening shape and the locations described herein are contemplated. FIGS. 2-11 are for illustrative purposes only and not meant to be limiting.

It should be appreciated that the dilution holes as described herein are exemplary as illustrated. The dilution holes can be organized in a myriad of different ways, and can include by way of non-limiting example ribs, pin banks, circuits, sub-circuits, film-openings, plenums, mesh, and turbulators, of any shape or size. The dilution holes can include other flow enhancing devices, by way of non-limiting example a small opening located behind the dilution hole. It is further contemplated that the dilution holes can be part of a collection of dilution holes. It is also contemplated that the dilution holes can be in addition to and separate from a collection of cooling holes located along the combustor liner.

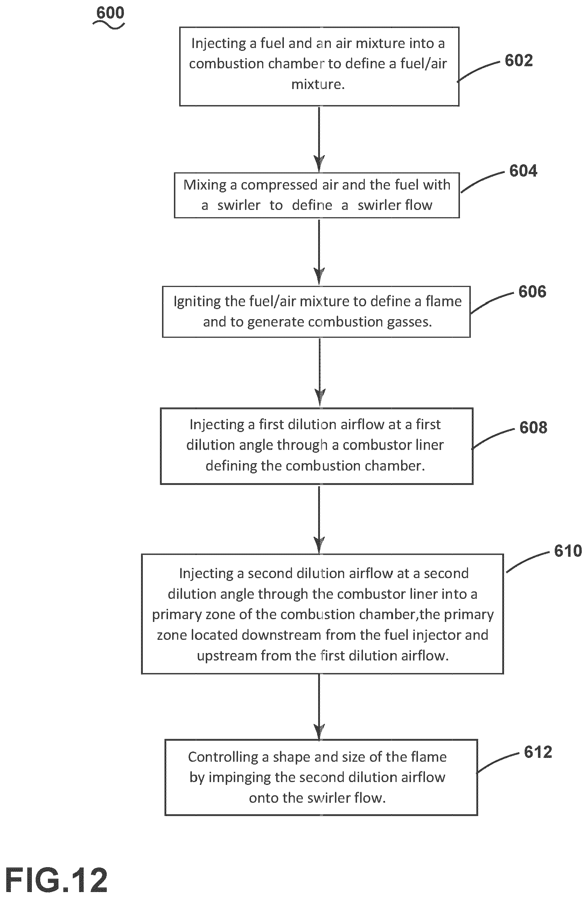

A flow chart for a method 600 for controlling nitrogen oxides, or NOₓ present in combustion gases (G) within the combustor 80 of FIG. 2 is illustrated in FIG. 12. The method 600 includes at block 602 injecting the fuel/air mixture into the combustion chamber and at 604 mixing the compressed air (C) and the fuel with a swirler to define the swirler flow (SF). At block 606 the fuel/air mixture is ignited to define a flame and generates combustion gasses. The method further includes at block 608 injecting the first dilution airflow (A1) at the first dilution angle (δ) through the combustor liner and injecting the second dilution airflow (A2) at a second dilution angle (α) through the combustor liner into the primary zone of the combustion chamber. At block 612 the method includes controlling a shape and size of the flame by impinging the second dilution airflow (A2) onto the swirler flow (SF).

The method 600 can further include the first dilution airflow (A1) being injected into the combustion chamber a greater extent than the second dilution airflow (A2). The method can further include the first dilution angle, described herein as the fourth dilution angle (θ) being angled toward the fuel injector and the second dilution angle, described herein as the third dilution angle (β) being angled away from the fuel injector as illustrated in FIG. 6. In other implementations, as illustrated in FIG. 4, the second dilution angle (α) is angled toward the fuel injector. It should be understood the airflow from the first set of dilution holes as described herein is directed in different directions and described as the first dilution airflow (A1) and the fifth dilution airflow (A5). The airflow from the second set of dilution openings as described herein is directed in different directions and indicated as the second dilution airflow (A2), the third dilution airflow (A3), and the fourth dilution airflow (A4).

Benefits associated with the combustor liner and methods described herein are uniform temperature distribution downstream of dilution openings which equates with better NOₓ and combustor exit temperature profile/pattern. A lower temperature on the deflector and liner equate with a better liner and deflector life.

While described with respect to a turbine engine, it should be appreciated that the combustor as described herein can be for any engine with a having a combustor that emits NOₓ. It should be appreciated that application of aspects of the disclosure discussed herein are applicable to engines with propeller sections or fan and booster sections along with turbojets and turbo engines as well.

To the extent not already described, the different features and structures of the various embodiments can be used in combination, or in substitution with each other as desired. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods.

## Claims

1. A turbine engine (10) comprising:
a compressor section (12), a combustion section (14), and a turbine section (16) in serial flow arrangement along an engine centerline (20), the combustion section (14) comprising:
a combustor liner (82, 182, 282, 382, 482) having a first end, a second end, opposing the first end, and at least partially defining a combustion chamber (86, 186, 286, 386, 486) extending between the first and second ends a length L;
a dome assembly (84, 184, 284, 384, 484) mounted to the combustor liner (82, 182, 282, 382, 482) at the first end and defining a dome inlet (98, 198, 298, 398, 498) of the combustion chamber (86, 186, 286, 386, 486); and
multiple sets of dilution holes (90a, 90b, 190a, 190b, 190c, 190d, 290a, 290b, 390a, 390b, 490a, 490b) comprising at least:
a first set of dilution holes (90a, 290a, 390a, 490a) provided in the combustor liner (82, 182, 282, 382, 482) a distance L1 downstream from the dome inlet (98, 198, 298, 398, 498), with the distance L1 being 0.2 to 0.7 of the length L; and
a second set of dilution holes (90b, 290b, 390b, 490b) provided in the combustor liner (82, 182, 282, 382, 482) between the first set of dilution holes (90a, 290a, 390a, 490a) and the dome inlet (98, 198, 298, 398, 498) a distance L2 downstream from the dome inlet (98, 198, 298, 398, 498), with the distance L2 being 0.0 to 0.2 of the length L, the second set of dilution holes (90b, 290b, 390b, 490b) having at least one physical characteristic that is different from the first set of dilution holes (90a, 290a, 390a, 490a);
wherein the second set of dilution holes (90b, 290b, 390b, 490b) is the only set of dilution holes in the combustor liner (82, 182, 282, 382, 482) between the dome inlet (98, 198, 298, 398, 498) and the first set of dilution holes (90a, 290a, 390a, 490a); and
wherein the at least one physical characteristic is a dilution angle (θ, α, β, δ),
the second set of dilution holes (90b, 290b, 390b, 490b) are angled away from the dome wall (114, 214, 314, 414, 514) to define a third dilution angle (β); and
the first set of dilution holes (90a, 290a, 390a, 490a) are angled either perpendicular to the combustor liner (282) to define a first dilution angle (δ) of about 90°, or toward the dome wall (114, 214, 314, 414, 514) to define a fourth dilution angle (θ).

2. The turbine engine (10) of claim 1, wherein each of the multiple sets of dilution holes (90a, 90b, 190a, 190b, 190c, 190d, 290a, 290b, 390a, 390b, 490a, 490b) further comprise a passage (90, 190, 290, 390, 490, 590) extending from an inlet to an outlet opening (192, 292, 392, 492, 592) and wherein the at least one physical characteristic is a total dilution flow area (FA) defined by a sum of the first and second set of dilution holes (90a, 90b, 290a, 290b, 390a, 390b, 490a, 490b) and wherein the outlet openings (192, 292, 392, 492, 592) in the second set of dilution holes (90b, 290b, 390b, 490b) define a second dilution airflow (A2) equal to or between 1% and 80% of the total dilution flow area (FA).

3. The turbine engine (10) of any preceding claim, further comprising a swirler (102, 202, 302, 402, 502) provided at the dome inlet (98, 198, 298, 398, 498) for providing a swirler flow (SF) and wherein the second set of dilution holes (90b, 290b, 390b, 490b) is angled to provide a second dilution airflow (A2) that impinges on the swirler flow (SF).

4. The turbine engine (10) of any preceding claim, wherein the first and second sets of dilution holes (90a, 90b, 290a, 290b, 390a, 390b, 490a, 490b) are staggered circumferentially with respect to each other.

5. The turbine engine (10) of any preceding claim, further comprising a third set of dilution holes (190c) downstream from the first and second sets of dilution holes (90a, 90b, 290a, 290b, 390a, 390b, 490a, 490b) and wherein the dome assembly (84, 184, 284, 384, 484) defines a dome centerline (DC) and a geometric center of each of the multiple sets of dilution holes (90a, 90b, 190a, 190b, 190c, 190d, 290a, 290b, 390a, 390b, 490a, 490b) is located at a measured length (L1, L2, L3, L4) parallel to the dome centerline from the dome wall (114, 214, 314, 414, 514).

6. The turbine engine (10) of claim 5, wherein the at least one physical characteristic is a diameter (D1, D2, D3, D4) and as a value of the measured length (L1, L2, L3, L4) increases, the value of the corresponding diameter (D1, D2, D3, D4) increases.

7. The turbine engine (10) of claim 5, wherein the at least one physical characteristic is a diameter (D1, D2, D3, D4) and as a value of the measured length (L1, L2, L3, L4) increases, the value of the corresponding diameter (D1, D2, D3, D4) decreases.

8. The turbine engine (10) of any preceding claim, wherein the second set of dilution holes (90b, 290b, 390b, 490b) define larger flow areas (FA) than the first set of dilution holes (90a, 290a, 390a, 490a) comprises.

9. The turbine engine (10) of claim 8, wherein the first set of dilution holes (90a, 290a, 390a, 490a) comprises have a first set of dilution inlet shapes (220) including a circular shape having a first diameter.

10. The turbine engine (10) of claim 9, wherein the second set of dilution holes (90b, 290b, 390b, 490b) have a second set of dilution inlet shapes (222) including an oblong shape.

11. The turbine engine (10) of claim 10, wherein the oblong shape defines a slot (227) having a circumferential dimension equal to multiple times the first diameter.

12. The turbine engine (10) of any preceding claim, wherein the first set of dilution holes (90a, 290a, 390a, 490a) defines a whole of a first row of dilution openings (216) extending at least partially circumferentially about the combustor liner (82, 282, 382, 482) or about an entirety of the combustor liner (82, 282, 382, 482), and wherein the second set of dilution holes (90b, 290b, 390b, 490b) defines a whole of a second row of dilution openings extending at least partially circumferentially about the combustor liner (82, 182, 282, 382, 482).

13. The turbine engine (10) of any of claims 1 to 11, wherein the first set of dilution holes (90a, 290a, 390a, 490a) defines a whole of a first row of dilution openings (216) extending at least partially circumferentially about the combustor liner (82, 282, 382, 482) or about an entirety of the combustor liner (82, 282, 382, 482), and wherein the second set of dilution holes (90b, 290b, 390b, 490b) defines a whole of a second row of dilution openings extending about an entirety of the combustor liner (82, 182, 282, 382, 482).

## Patentansprüche

1. Turbinentriebwerk (10), umfassend:
einen Kompressorabschnitt (12), einen Verbrennungsabschnitt (14) und einen Turbinenabschnitt (16), die in einer seriellen Strömungsanordnung entlang einer Triebwerksmittellinie (20) angeordnet sind, wobei der Verbrennungsabschnitt (14) umfasst:
eine Verbrennerauskleidung (82, 182, 282, 382, 482), aufweisend ein erstes Ende, ein dem ersten Ende gegenüberliegendes zweites Ende und zumindest teilweise eine Brennkammer (86, 186, 286, 386, 486), die sich zwischen dem ersten und dem zweiten Ende über eine Länge L erstreckt;
eine Kuppelbaugruppe (84, 184, 284, 384, 484), die an der Verbrennerauskleidung (82, 182, 282, 382, 482) an dem ersten Ende angebracht ist und einen Kuppeleinlass (98, 198, 298, 398, 498) der Brennkammer (86, 186, 286, 386, 486) definiert; und
mehrere Sätze von Verdünnungslöchern (90a, 90b, 190a, 190b, 190c, 190d, 290a, 290b, 390a, 390b, 490a, 490b), die mindestens Folgendes umfassen:
einen ersten Satz von Verdünnungslöchern (90a, 290a, 390a, 490a), die in der Verbrennerauskleidung (82, 182, 282, 382, 482) in einem Abstand L1 zum Kuppeleinlass (98, 198, 298, 398, 498) nachgelagert bereitgestellt sind, wobei der Abstand L1 0,2 bis 0,7 der Länge L beträgt; und
einen zweiten Satz von Verdünnungslöchern (90b, 290b, 390b, 490b), die in der Verbrennerauskleidung (82, 182, 282, 382, 482) zwischen dem ersten Satz von Verdünnungslöchern (90a, 290a, 390a, 490a) und dem Kuppeleinlass (98, 198, 298, 398, 498) in einem Abstand L2 zum Kuppeleinlass (98, 198, 298, 398, 498) nachgelagert bereitgestellt sind, wobei der Abstand L2 0,0 bis 0,2 der Länge L beträgt, wobei der zweite Satz von Verdünnungslöchern (90b, 290b, 390b, 490b) mindestens eine physische Eigenschaft aufweist, die sich von der des ersten Satzes von Verdünnungslöchern (90a, 290a, 390a, 490a) unterscheidet;
wobei der zweite Satz von Verdünnungslöchern (90b, 290b, 390b, 490b) der einzige Satz von Verdünnungslöchern in der Verbrennerauskleidung (82, 182, 282, 382, 482) zwischen dem Kuppeleinlass (98, 198, 298, 398, 498) und dem ersten Satz von Verdünnungslöchern (90a, 290a, 390a, 490a) ist; und wobei das mindestens eine physische Merkmal ein Verdünnungswinkel (θ, α, β, δ) ist, wobei der zweite Satz von Verdünnungslöchern (90b, 290b, 390b, 490b) von der Kuppelwand (114, 214, 314, 414, 514) weg geneigt ist, um einen dritten Verdünnungswinkel (β) zu definieren; und
der erste Satz von Verdünnungslöchern (90a, 290a, 390a, 490a) entweder senkrecht zu der Verbrennerauskleidung (282) abgewinkelt ist, um einen ersten Verdünnungswinkel (5) von etwa 90° zu definieren, oder zu der Kuppelwand (114, 214, 314, 414, 514) geneigt ist, um einen vierten Verdünnungswinkel (θ) zu definieren.

2. Turbinentriebwerk (10) nach Anspruch 1, wobei jeder der mehreren Sätze von Verdünnungslöchern (90a, 90b, 190a, 190b, 190c, 190d, 290a, 290b, 390a, 390b, 490a, 490b) ferner einen Durchgang (90, 190, 290, 390, 490, 590) umfasst, der sich von einer Einlass- zu einer Auslassöffnung (192, 292, 392, 492, 592) erstreckt, und wobei die mindestens eine physische Eigenschaft eine Gesamtverdünnungsströmungsfläche (FA) ist, die durch eine Summe des ersten und zweiten Satzes von Verdünnungslöchern (90a, 90b, 290a, 290b, 390a, 390b, 490a, 490b) definiert ist, und wobei die Auslassöffnungen (192, 292, 392, 492, 592) in dem zweiten Satz von Verdünnungslöchern (90b, 290b, 390b, 490b) einen zweiten Verdünnungsluftstrom (A2) definieren, der gleich oder zwischen 1 % und 80 % der Gesamtverdünnungsströmungsfläche (FA) ist.

3. Turbinentriebwerk (10) nach einem der vorhergehenden Ansprüche, das ferner einen Wirbler (102, 202, 302, 402, 502) umfasst, der an dem Kuppeleinlass (98, 198, 298, 398, 498) bereitgestellt ist, um einen Wirbelstrom (SF) zu bereitzustellen, und wobei der zweite Satz von Verdünnungslöchern (90b, 290b, 390b, 490b) abgewinkelt ist, um einen zweiten Verdünnungsluftstrom (A2) bereitzustellen, der auf den Wirbelstrom (SF) auftrifft.

4. Turbinentriebwerk (10) nach einem der vorhergehenden Ansprüche, wobei der erste und der zweite Satz von Verdünnungslöchern (90a, 90b, 290a, 290b, 390a, 390b, 490a, 490b) in Umfangsrichtung zueinander versetzt angeordnet sind.

5. Turbinentriebwerk (10) nach einem der vorhergehenden Ansprüche, das ferner einen dritten Satz von Verdünnungslöchern (190c), die dem ersten und zweiten Satz von Verdünnungslöchern (90a, 90b, 290a, 290b, 390a, 390b, 490a, 490b) nachgelagert sind, umfasst und wobei die Kuppelbaugruppe (84, 184, 284, 384, 484) eine Kuppelmittellinie (DC) definiert und ein geometrischer Mittelpunkt jedes der mehreren Sätze von Verdünnungslöchern (90a, 90b, 190a, 190b, 190c, 190d, 290a, 290b, 390a, 390b, 490a, 490b) sich in einer gemessenen Länge (L1, L2, L3, L4) parallel zu der Kuppelmittellinie von der Kuppelwand (114, 214, 314, 414, 514) entfernt befindet.

6. Turbinentriebwerk (10) nach Anspruch 5, wobei die mindestens eine physische Eigenschaft ein Durchmesser (D1, D2, D3, D4) ist und mit zunehmendem Wert der gemessenen Länge (L1, L2, L3, L4) der Wert des entsprechenden Durchmessers (D1, D2, D3, D4) zunimmt.

7. Turbinentriebwerk (10) nach Anspruch 5, wobei die mindestens eine physische Eigenschaft ein Durchmesser (D1, D2, D3, D4) ist und mit zunehmendem Wert der gemessenen Länge (L1, L2, L3, L4) der Wert des entsprechenden Durchmessers (D1, D2, D3, D4) abnimmt.

8. Turbinentriebwerk (10) nach einem der vorhergehenden Ansprüche, wobei der zweite Satz von Verdünnungslöchern (90b, 290b, 390b, 490b) größere Strömungsflächen (PA) definiert als der erste Satz von Verdünnungslöchern (90a, 290a, 390a, 490a).

9. Turbinentriebwerk (10) nach Anspruch 8, wobei der erste Satz von Verdünnungslöchern (90a, 290a, 390a, 490a) einen ersten Satz von Verdünnungseinlassformen (220) umfasst, einschließlich einer kreisförmigen Form, die einen ersten Durchmesser aufweist.

10. Turbinentriebwerk (10) nach Anspruch 9, wobei der zweite Satz von Verdünnungslöchern (90b, 290b, 390b, 490b) einen zweiten Satz von Verdünnungseinlassformen (222) aufweist, einschließlich einer länglichen Form.

11. Turbinentriebwerk (10) nach Anspruch 10, wobei die längliche Form einen Schlitz (227), der eine Umfangsabmessung definiert, aufweist, die einem Vielfachen des ersten Durchmessers entspricht.

12. Turbinentriebwerk (10) nach einem der vorhergehenden Ansprüche, wobei der erste Satz von Verdünnungslöchern (90a, 290a, 390a, 490a) eine ganze erste Reihe von Verdünnungsöffnungen (216) definiert, die sich zumindest teilweise umfänglich um die Verbrennerauskleidung (82, 282, 382, 482) oder um die gesamte Verbrennerauskleidung (82, 282, 382, 482) erstreckt, und wobei der zweite Satz von Verdünnungslöchern (90b, 290b, 390b, 490b) eine zweite Reihe von Verdünnungsöffnungen definiert, die sich zumindest teilweise umfänglich um die Verbrennerauskleidung (82, 182, 282, 382, 482) erstrecken.

13. Turbinentriebwerk (10) nach einem der Ansprüche 1 bis 11, wobei der erste Satz von Verdünnungslöchern (90a, 290a, 390a, 490a) eine erste Reihe von Verdünnungsöffnungen (216) definiert, die sich zumindest teilweise umfänglich um die Verbrennerauskleidung (82, 282, 382, 482) oder um die gesamte Verbrennerauskleidung (82, 282, 382, 482) erstreckt, und wobei der zweite Satz von Verdünnungslöchern (90b, 290b, 390b, 490b) eine zweite Reihe von Verdünnungsöffnungen definiert, die sich um die gesamte Verbrennerauskleidung (82, 182, 282, 382, 482) erstrecken.

## Revendications

1. Turbomoteur (10) comprenant :
une section de compresseur (12), une section de combustion (14) et une section de turbine (16) en agencement d'écoulement en série le long d'une ligne (20) médiane de moteur, la section de combustion (14) comprenant :
une chemise (82, 182, 282, 382, 482) de chambre de combustion présentant une première extrémité, une seconde extrémité opposée à la première extrémité, et définissant au moins partiellement une chambre de combustion (86, 186, 286, 386, 486) s'étendant entre les première et secondes extrémités sur une longueur L ;
un ensemble formant dôme (84, 184, 284, 384, 484) monté sur la chemise (82, 182, 282, 382, 482) de chambre de combustion au niveau de la première extrémité et définissant une entrée de dôme (98, 198, 298, 398, 498) de la chambre de combustion (86, 186, 286, 386, 486) ; et
de multiples ensembles (90a, 90b, 190a, 190b, 190c, 190d, 290a, 290b, 390a, 390b, 490a, 490b) de trous de dilution comprenant au moins :
un premier ensemble (90a, 290a, 390a, 490a) de trous de dilution prévus dans la chemise (82, 182, 282, 382, 482) de chambre de combustion à une distance L1 en aval de l'entrée de dôme (98, 198, 298, 398, 498), la distance L1 étant de 0,2 à 0,7 fois la longueur L ; et
un deuxième ensemble (90b, 290b, 390b, 490b) de trous de dilution prévus dans la chemise (82, 182, 282, 382, 482) de chambre de combustion entre le premier ensemble (90a, 290a, 390a, 490a) de trous de dilution et l'entrée de dôme (98, 198, 298, 398, 498) à une distance L2 en aval de l'entrée de dôme (98, 198, 298, 398, 498), la distance L2 étant de 0,0 à 0,2 fois la longueur L, le deuxième ensemble (90b, 290b, 390b, 490b) de trous de dilution présentant au moins une caractéristique physique différente de celle du premier ensemble (90a, 290a, 390a, 490a) de trous de dilution ;
dans lequel le deuxième ensemble (90b, 290b, 390b, 490b) de trous de dilution est le seul ensemble de trous de dilution dans la chemise (82, 182, 282, 382, 482) de chambre de combustion entre l'entrée de dôme (98, 198, 298, 398, 498) et le premier ensemble (90a, 290a, 390a, 490a) de trous de dilution ; et
dans lequel l'au moins une caractéristique physique est un angle de dilution (θ, α, β, δ),
le deuxième ensemble (90b, 290b, 390b, 490b) de trous de dilution est écarté de manière angulaire par rapport à la paroi de dôme (114, 214, 314, 414, 514) pour définir un troisième angle de dilution (β) ; et
le premier ensemble (90a, 290a, 390a, 490a) de trous de dilution est incliné soit perpendiculairement à la chemise (282) de chambre de combustion pour définir un premier angle de dilution (δ) d'environ 90°, soit vers la paroi de dôme (114, 214, 314, 414, 514) pour définir un quatrième angle de dilution (θ).

2. Turbomoteur (10) selon la revendication 1, dans lequel chacun des multiples ensembles (90a, 90b, 190a, 190b, 190c, 190d, 290a, 290b, 390a, 390b, 490a, 490b) de trous de dilution comprend en outre un passage (90, 190, 290, 390, 490, 590) s'étendant depuis une entrée vers une ouverture de sortie (192, 292, 392, 492, 592) et dans lequel l'au moins une caractéristique physique est une section (FA) d'écoulement de dilution totale définie par une somme des premier et deuxième ensembles (90a, 90b, 290a, 290b, 390a, 390b, 490a, 490b) de trous de dilution et dans lequel les ouvertures de sortie (192, 292, 392, 492, 592) dans le deuxième ensemble (90b, 290b, 390b, 490b) de trous de dilution définissent un second flux (A2) d'air de dilution égal à ou compris entre 1 % et 80 % de la section (FA) d'écoulement de dilution totale.

3. Turbomoteur (10) selon une quelconque revendication précédente, comprenant en outre une coupelle de turbulence (102, 202, 302, 402, 502) prévue au niveau de l'entrée de dôme (98, 198, 298, 398, 498) pour fournir un écoulement tourbillonnaire (SF) et dans lequel le deuxième ensemble (90b, 290b, 390b, 490b) de trous de dilution est incliné pour fournir un second flux (A2) d'air de dilution qui est incident sur l'écoulement tourbillonnaire (SF).

4. Turbomoteur (10) selon une quelconque revendication précédente, dans lequel les premier et deuxième ensembles (90a, 90b, 290a, 290b, 390a, 390b, 490a, 490b) de trous de dilution sont échelonnés circonférentiellement l'un par rapport à l'autre.

5. Turbomoteur (10) selon une quelconque revendication précédente, comprenant en outre un troisième ensemble (190c) de trous de dilution en aval des premier et deuxième ensembles (90a, 90b, 290a, 290b, 390a, 390b, 490a, 490b) de trous de dilution et dans lequel l'ensemble formant dôme (84, 184, 284, 384, 484) définit une ligne (DC) médiane de dôme et un centre géométrique de chacun des multiples ensembles (90a, 90b, 190a, 190b, 190c, 190d, 290a, 290b, 390a, 390b, 490a, 490b) de trous de dilution est situé à une longueur mesurée (L1, L2, L3, L4) parallèle à la ligne médiane de dôme à partir de la paroi de dôme (114, 214, 314, 414, 514).

6. Turbomoteur (10) selon la revendication 5, dans lequel l'au moins une caractéristique physique est un diamètre (D1, D2, D3, D4) et, à mesure qu'une valeur de la longueur mesurée (L1, L2, L3, L4) augmente, la valeur du diamètre correspondant (D1, D2, D3, D4) augmente.

7. Turbomoteur (10) selon la revendication 5, dans lequel l'au moins une caractéristique physique est un diamètre (D1, D2, D3, D4) et, à mesure qu'une valeur de la longueur mesurée (L1, L2, L3, L4) augmente, la valeur du diamètre correspondant (D1, D2, D3, D4) diminue.

8. Turbomoteur (10) selon une quelconque revendication précédente, dans lequel le deuxième ensemble (90b, 290b, 390b, 490b) de trous de dilution définit des sections d'écoulement (FA) plus grandes que celles du premier ensemble (90a, 290a, 390a, 490a) de trous de dilution.

9. Turbomoteur (10) selon la revendication 8, dans lequel le premier ensemble (90a, 290a, 390a, 490a) de trous de dilution présente un premier ensemble (220) de formes d'entrée de dilution comprenant une forme circulaire ayant un premier diamètre.

10. Turbomoteur (10) selon la revendication 9, dans lequel le deuxième ensemble (90b, 290b, 390b, 490b) de trous de dilution présente un second ensemble (222) de formes d'entrée de dilution comprenant une forme oblongue.

11. Turbomoteur (10) selon la revendication 10, dans lequel la forme oblongue définit une fente (227) présentant une dimension circonférentielle égale à plusieurs fois le premier diamètre.

12. Turbomoteur (10) selon une quelconque revendication précédente, dans lequel le premier ensemble (90a, 290a, 390a, 490a) de trous de dilution définit toute une première rangée (216) d'ouvertures de dilution s'étendant au moins partiellement circonférentiellement autour de la chemise (82, 282, 382, 482) de chambre de combustion ou autour de l'ensemble de la chemise (82, 282, 382, 482) de chambre de combustion, et dans lequel le deuxième ensemble (90b, 290b, 390b, 490b) de trous de dilution définit toute une seconde rangée d'ouvertures de dilution s'étendant au moins partiellement circonférentiellement autour de la chemise (82, 182, 282, 382, 482) de chambre de combustion.

13. Turbomoteur (10) selon l'une quelconque des revendications 1 à 11, dans lequel le premier ensemble (90a, 290a, 390a, 490a) de trous de dilution définit toute une première rangée (216) d'ouvertures de dilution s'étendant au moins partiellement circonférentiellement autour de la chemise (82, 282, 382, 482) de chambre de combustion ou autour de l'ensemble de la chemise (82, 282, 382, 482) de chambre de combustion, et dans lequel le deuxième ensemble (90b, 290b, 390b, 490b) de trous de dilution définit toute une seconde rangée d'ouvertures de dilution s'étendant autour de l'ensemble de la chemise (82, 182, 282, 382, 482) de chambre de combustion.
